# EUROPEAN PATENT APPLICATION

(11) **EP 4 512 842 A1**
(43) Date of publication of application: **26.02.2025**
(21) Application number: 23791546.7
(22) Date of filing: 02.03.2023
(51) Int. Cl.: C08G 59/50, C08J 5/04

(54) **EPOXY RESIN CURING AGENT, EPOXY RESIN COMPOSITION AND CURED PRODUCT THEREOF, FIBER-REINFORCED COMPOSITE MATERIAL, AND HIGH-PRESSURE GAS CONTAINER**

(30) Priority: 20.04.2022 JP 2022069571
(71) Applicant: MITSUBISHI GAS CHEMICAL COMPANY, INC., Chiyoda-ku Tokyo 100-8324 (JP)
(72) Inventor: IKEUCHI Kousuke, Hiratsuka-shi, Kanagawa 254-0016 (JP); WAKAHARA Daiki, Tokyo 125-8601 (JP); OHNISHI Nobuyoshi, Tokyo 125-8601 (JP); OKADA Kana, Hiratsuka-shi, Kanagawa 254-0016 (JP); MATSUMOTO Nobuhiko, Hiratsuka-shi, Kanagawa 254-0016 (JP)
(74) Representative: Vossius & Partner Patentanwälte Rechtsanwälte mbB
(86) International application number: PCT/JP2023/007853
(87) International publication number: WO 2023/203891

(57) **Abstract**

Provided are an epoxy resin curing agent, an epoxy resin composition, a cured product thereof, a fiber-reinforced composite material, and a high-pressure gas container including the fiber-reinforced composite material, the epoxy resin curing agent including the following components (A-1) and (A-2):
(A-1) a reaction composition containing polycondensation reaction product of aniline derivative and formaldehyde
(A-2) a reaction composition containing a reaction product of styrene and a compound represented by the following General Formula (1):

H₂N-CH₂-A-CH₂-NH₂ (1)

(in Formula (1), A is a 1,2-phenylene group, a 1,3-phenylene group, or a 1,4-phenylene group).

In the epoxy resin curing agent, a content of the component (A-1) is from 50 to 95 mass%, and a content of the component (A-2) is from 5 to 50 mass%.

## Description

### Technical Field

The present invention relates to an epoxy resin curing agent, an epoxy resin composition and a cured product thereof, a fiber-reinforced composite material, and a high-pressure gas container that contains the fiber-reinforced composite material.

### Background Art

In recent years, environmentally friendly natural gas vehicles (CNG vehicles) and fuel cell vehicles (FCV) are becoming more popular. Fuel cell vehicles use, as their power sources, fuel cells, and constructing hydrogen stations where hydrogen as their fuels is compressed at a high pressure for filling in vehicles is essential.

Although steel tanks have been used so far as high-pressure gas storage tanks for use in hydrogen stations for fuel cell vehicles or as automotive fuel tanks for CNG vehicles, fuel cell vehicles etc., development of a lighter high-pressure gas storage tank in which a resin material is used for a liner of the tank or its outer layer is in progress. Weight reduction of automotive fuel tanks can improve the fuel economy of the vehicles equipped therewith and also provides other benefits.

A pressure vessel such as a high-pressure gas storage tank usually has a metallic liner and an outer layer provided so as to cover an outer surface of the liner, in recent years; however, the creation of a linerless pressure vessel has also been studied in order to create a lighter weight pressure vessel.

As a manufacturing method for a pressure vessel, there is known a method of manufacturing a pressure vessel through filament winding molding by using a tow-prepreg (also referred to as tow-preg) having reinforcing fibers impregnated with an epoxy resin composition in advance.

For example, Patent Document 1 discloses that a tow-preg obtained by impregnating a reinforcing fiber bundle with an epoxy resin composition that contains an epoxy resin having no hydroxy group in the chemical structure of the main component, an aromatic amine that is in the liquid state at 25°C, and a toughening agent and satisfies predetermined conditions is excellent in the widening property of the tow during filament winding molding, and the impregnated epoxy resin composition has excellent pot life, fracture toughness, and elongation. In Examples of Patent Document 1, diethyltoluenediamine and 3,3'-diethyl-4,4'-diaminodiphenylmethane are used as the liquid aromatic amine.

### Citation List

### Patent Document

Patent Document 1: JP 2021-116403 A

### Summary of Invention

### Technical Problem

High barrier properties against hydrogen gas are required for high-pressure gas containers for hydrogen gas storage, such as those used in hydrogen stations for fuel cell vehicles or automotive fuel tanks for such vehicles as CNG vehicles and fuel cell vehicles. In particular, for the case of linerless high-pressure gas containers, higher hydrogen gas barrier properties are required for the material used for the high-pressure gas containers. Moreover, as described in Patent Document 1, a long pot life is required for an epoxy resin composition for a tow-preg to be used in filament winding molding.

In addition to those described above, the gas barrier properties of a resin material generally tend to decrease when the resin material absorbs moisture, and hence when a resin material is used in the production of high-pressure gas containers, there is also a concern of entering oxygen, water vapor, or the like from the outside under a high-humidity environment. In this regard, there has been still room for improvement in the technology disclosed in Patent Document 1.

An object of the present invention is to provide an epoxy resin curing agent, an epoxy resin composition, a cured product thereof, a fiber-reinforced composite material, and a high-pressure gas container containing the fiber-reinforced composite material, which have high hydrogen gas barrier properties, exhibit little deterioration in the gas barrier properties even under high-humidity conditions, and can achieve a long pot life.

### Solution to Problem

The present inventors have found that the above-mentioned issue can be solved by an epoxy resin curing agent in which two types of polyamines, each having a specific structure containing an aromatic ring, are contained at a predetermined ratio.

That is, the present invention relates to the following.
[1] An epoxy resin curing agent, including the following component (A-1) and component (A-2):
   (A-1) a reaction composition containing a polycondensation reaction product of an aniline derivative and formaldehyde;
   (A-2) a reaction composition containing a reaction product of styrene and a compound represented by the following General Formula (1):

      H₂N-CH₂-A-CH₂-NH₂ (1)
   (in Formula (1), A is a 1,2-phenylene group, a 1,3-phenylene group, or a 1,4-phenylene group)
   wherein, in the epoxy resin curing agent, a content of the component (A-1) is from 50 to 95 mass%, and a content of the component (A-2) is from 5 to 50 mass%.
[2] An epoxy resin composition including an epoxy resin and the epoxy resin curing agent according to [1].
[3] A cured product of the epoxy resin composition according to [2].
[4] A fiber-reinforced composite material including a cured product of the epoxy resin composition according to [2] and reinforcing fibers.
[5] A high-pressure gas container including the fiber-reinforced composite material according to [4].

### Advantageous Effects of Invention

According to the present invention, it is possible to provide an epoxy resin curing agent, an epoxy resin composition, a cured product thereof, a fiber-reinforced composite material, and a high-pressure gas container including the fiber-reinforced composite material, which have high hydrogen gas barrier properties, exhibit little deterioration in the gas barrier properties even under high humidity conditions, and can achieve a long pot life. The high-pressure gas container can be manufactured through filament winding molding, and it is also possible to be made into a linerless high-pressure gas container. Furthermore, since the high-pressure gas container has high hydrogen gas barrier properties, it is suitable as a container for high-pressure hydrogen storage.

### Description of Embodiments

### [Definitions]

In the present specification, the "reaction composition containing a reaction product of X and Y" is a composition obtained by reacting X with Y, and means a composition containing a reaction product (an adduct) of X and Y, and also by-products other than the reaction product, unreacted raw materials X and Y, and the like.

In the present specification, the effect of suppressing a deterioration in the gas barrier properties under high humidity conditions is evaluated by an index that is the rate of increase in oxygen permeability coefficient which is calculated, from the oxygen permeability coefficient of a cured product of an epoxy resin composition under dry conditions at 23°C (0% relative humidity) and the oxygen permeability coefficient at 23°C and 80% relative humidity, by the following formula. The oxygen permeability coefficient can be measured by the method described in Examples.
Rate (%) of increase in oxygen permeability coefficient = [(Oxygen permeability coefficient at 23°C and 80% relative humidity) - (Oxygen permeability coefficient at 23°C and 0% relative humidity)]/(Oxygen permeability coefficient at 23°C and 0% relative humidity) × 100

### [Epoxy resin curing agent]

The epoxy resin curing agent of the present invention (hereinafter, also referred to as "curing agent of the present invention") includes the following components (A-1) and (A-2):
(A-1) a reaction composition containing a polycondensation reaction product of an aniline derivative and formaldehyde;
(A-2) a reaction composition containing a reaction product of styrene and a compound represented by the following General Formula (1):

   H₂N-CH₂-A-CH₂-NH₂ (1)
(in Formula (1), A is a 1,2-phenylene group, a 1,3-phenylene group, or a 1,4-phenylene group)
where in the epoxy resin curing agent, a content of the component (A-1) is from 50 to 95 mass%, and a content of the component (A-2) is from 5 to 50 mass%.

The curing agent of the present invention has the above-described composition, and hence can provide an epoxy resin composition which have high hydrogen gas barrier properties, exhibit little deterioration in the gas barrier properties even under high humidity conditions, and can achieve a long pot life.

The reason why the above-described effect can be obtained in the present invention is not clear, but is inferred as follows.

The reaction composition containing a polycondensation reaction product of an aniline derivative and formaldehyde, which serves as a component (A-1), acts as an amine-based epoxy resin curing agent. The component (A-1) is a low-viscosity composition and easily achieves a long pot life, and thus is suitable for an epoxy resin composition for a tow-preg used in filament winding molding. The component (A-1) is also an amine-based curing agent and hence exhibits relatively high gas barrier properties (in particular, high hydrogen gas barrier properties).

On the other hand, it has been found that a deterioration in gas barrier properties occurs under high humidity conditions when the component (A-1) is used as an epoxy resin curing agent for a cured product of an epoxy resin composition. As a result of studies, the present inventors have found that an epoxy resin curing agent having the component (A-1) and the component (A-2) blended at a specific ratio enables to suppress the deterioration in the gas barrier properties under high humidity conditions while retaining low viscosity, high hydrogen gas barrier properties, and a long pot life. The component (A-2), which is an amine-based curing agent, has low viscosity and high gas barrier properties as with the component (A-1). Although the component (A-2) is of fast cure type and disadvantageous in terms of ensuring long pot life, the content of component (A-2) in the curing agent is adjusted within a specific range thereby enabling to retain a long pot life. Furthermore, the component (A-2) exhibits low water absorption, and hence is believed to be able to suppress the deterioration in the gas barrier properties under high humidity conditions.

### <Component (A-1): Reaction composition containing polycondensation reaction product of aniline derivative and formaldehyde>

The component (A-1) is a reaction composition containing a polycondensation reaction product of an aniline derivative and formaldehyde. The component (A-1) is an amine-based curing agent which has a low viscosity and high hydrogen gas barrier properties and can achieve a long pot life.

The aniline derivative used for the component (A-1) is preferably a compound in which no substituents present on the nitrogen atom of aniline and at least one hydrogen atom on the aromatic ring of aniline is substituted with a substituent, from a point of view of reactivity with formaldehyde and from a point of view of action as an amine-based curing agent. Examples of the substituent include at least one selected from the group consisting of an alkyl group, an alkenyl group, an aryl group, an aralkyl group, an alkoxy group, and a hydroxy group. From a point of view of the reactivity with formaldehyde and from a point of view of action as an amine-based curing agent, the substituent is preferably at least one selected from the group consisting of an alkyl group and an aryl group.

Note that the aniline derivative defined in the present invention does not include aniline. Because diaminodiphenylmethane, which is a polycondensation reaction product of aniline and formaldehyde, is a solid compound at room temperature (25°C), an epoxy resin curing agent containing diaminodiphenylmethane and an epoxy resin composition each are a solid or a highly viscous liquid and are not suitable for filament winding molding.

From a point of view of obtaining a curing agent capable of achieving a low viscosity, high hydrogen gas barrier properties, and a long pot life, the aniline derivative is more preferably a compound represented by the following General Formula (2). 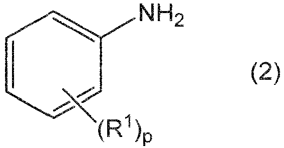 (In Formula (2), R¹ is an alkyl group having from 1 to 6 carbons or an aryl group, and p is a number from 1 to 3.)

In Formula (2), an alkyl group in R¹ is preferably an alkyl group having from 1 to 4 carbons, more preferably from 1 to 3 carbons, and further preferably from 1 to 2 carbons. Examples of the alkyl group include a methyl group, an ethyl group, a n-propyl group, an isopropyl group, a n-butyl group, an isobutyl group, a sec-butyl group, a tert-butyl group, a n-pentyl group, a neopentyl group and a n-hexyl group, the alkyl group is preferably a methyl group, an ethyl group, a n-propyl group, an isopropyl group, a n-butyl group, an isobutyl group, a sec-butyl group or a tert-butyl group, is more preferably a methyl group, an ethyl group, a n-propyl group or an isopropyl group, and is further preferably a methyl group or an ethyl group.

In Formula (2), examples of the aryl group in R¹ include a phenyl group, a toluyl group, a mesityl group, a biphenyl group, and a naphthyl group, and a phenyl group is preferable.

In Formula (2), p is preferably from 1 to 2 and more preferably 1. When p is 2 or 3, a plurality of R¹s may be identical to or different from each other, but are preferably identical to each other.

Specific examples of the aniline derivative used in the component (A-1) include 2-methylaniline, 3-methylaniline, 4-methylaniline, 2-ethylaniline, 3-ethylaniline, 4-ethylaniline, 2,3-dimethylaniline, 2,4-dimethylaniline, 2,5-dimethylaniline, 2,6-dimethylaniline, 3,4-dimethylaniline, 3,5-dimethylaniline, 2-propylaniline, 3-propylaniline, 4-propylaniline, 2-isopropylaniline, 3-isopropylaniline, 4-isopropylaniline, 2-ethyl-6-methylaniline, 2-sec-butylaniline, 2-tert-butylaniline, 4-n-butylaniline, 4-sec-butylaniline, 4-tert-butylaniline, 2,3-diethylaniline, 2,4-diethylaniline, 2,5-diethylaniline, 2,6-diethylaniline, 2-isopropyl-6-methylaniline, and 4-aminobiphenyl, and one type or two or more types of these can be used.

Among them, from a point of view of obtaining an epoxy resin composition capable of achieving low viscosity, high hydrogen gas barrier properties and long pot life, the aniline derivative is preferably at least one selected from the group consisting of 2-methylaniline, 3-methylaniline, 4-methylaniline, 2-ethylaniline, 3-ethylaniline, 4-ethylaniline, 3-propylaniline, 4-propylaniline, 2-isopropylaniline, 3-isopropylaniline, 4-isopropylaniline, 2-sec-butylaniline, 2-tert-butylaniline, 4-n-butylaniline, 4-sec-butylaniline and 4-tert-butylaniline, is more preferably at least one selected from the group consisting of 2-methylaniline, 3-methylaniline, 4-methylaniline, 2-ethylaniline, 3-ethylaniline, 4-ethylaniline, 3-propylaniline, 4-propylaniline, 2-isopropylaniline, 3-isopropylaniline, and 4-isopropylaniline, is further preferably at least one selected from the group consisting of 2-methylaniline, 3-methylaniline, 4-methylaniline, 2-ethylaniline, 3-ethylaniline and 4-ethylaniline, is even more preferably at least one selected from the group consisting of 2-ethylaniline, 3-ethylaniline and 4-ethylaniline, and is even more preferably 2-ethylaniline.

The component (A-1) is obtained from a polycondensation reaction of an aniline derivative with formaldehyde by a known method. The content of the polycondensation reaction product of an aniline derivative and formaldehyde in the reaction composition as the component (A-1) is preferably 50 mass% or more, more preferably 70 mass% or more, further preferably 80 mass% or more, even more preferably 90 mass% or more, and 100 mass% or less from a point of view of effectively achieving the effect of the present invention. For example, when the aniline derivative is 2-ethylaniline, the polycondensation reaction product of 2-ethylaniline and formaldehyde means 3,3'-diethyl-4,4'-diaminodiphenylmethane.

As the component (A-1), a commercially available product can also be used. Examples of commercially available products of the component (A-1) include "KAYAHARD AA" (a reaction composition containing a polycondensation reaction product of 2-ethylaniline and formaldehyde (3,3'-diethyl-4,4'-diaminodiphenylmethane)) available from Nippon Kayaku Co., Ltd.

### <Component (A-2): Reaction composition containing reaction product of styrene and compound represented by General Formula (1)>

The component (A-2) is a reaction composition containing a reaction product of styrene and a compound represented by the following General Formula (1). The component (A-2) is an amine-based curing agent having a low viscosity and high hydrogen gas barrier properties and capable of suppressing the deterioration in the gas barrier properties under high humidity conditions.

H₂N-CH₂-A-CH₂-NH₂ (1)

(In Formula (1), A is a 1,2-phenylene group, a 1,3-phenylene group, or a 1,4-phenylene group.)

In Formula (1), A is preferably a 1,3-phenylene group or a 1,4-phenylene group, and more preferably a 1,3-phenylene group. That is, the compound represented by General Formula (1) is one or more types of xylylenediamine selected from the group consisting of o-xylylenediamine, m-xylylenediamine (meta-xylylenediamine; MXDA), and p-xylylenediamine (para-xylylenediamine; PXDA), is preferably one or more types selected from the group consisting of meta-xylylenediamine and para-xylylenediamine, and is more preferably meta-xylylenediamine.

The component (A-2) preferably contains 10 mass% or more of a compound represented by the following General Formula (1-1). 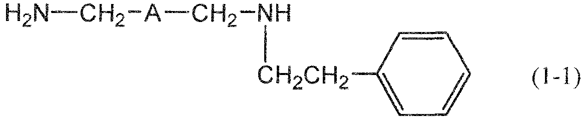 (In Formula (1-1), A is the same as that described above.)

The compound represented by General Formula (1-1) is, among reaction products of styrene and the compound represented by General Formula (1) (hereinafter, also referred to as a "raw material polyamine"), a reaction product obtained from an addition of 1 mol of styrene and 1 mol of the raw material polyamine (hereinafter, also referred to as a "1:1 adduct").

The component (A-2) may contain a polyadduct such as a 2:1 adduct, a 3:1 adduct, or a 4:1 adduct of styrene and a raw material polyamine besides a 1:1 adduct of styrene and a raw material polyamine, which is a compound represented by General Formula (1-1), but among the adducts, a 1:1 adduct of styrene and a raw material polyamine has the lowest active hydrogen equivalent weight. The active hydrogen equivalent weight (hereinafter also referred to as "AHEW") is a molecular weight per one equivalent of active hydrogen that can react with an epoxy resin that is a main agent of an epoxy resin composition. Therefore, the epoxy resin curing agent, in which the component (A-2) containing the compound represented by General Formula (1-1) as a main component is used, can exhibit an excellent curing performance even when the amount thereof to be blended into the epoxy resin composition is small.

From a point of view of achieving the above-mentioned effect, the content of the compound represented by General Formula (1-1) in the component (A-2) is more preferably 20 mass% or more, further preferably 30 mass% or more, even more preferably 45 mass% or more, and 100 mass% or less.

The content of the compound represented by General Formula (1-1) in the component (A-2) can be determined by gas chromatography (GC) analysis.

From a point of view of exhibiting an excellent curing performance even when the amount thereof to be blended into the epoxy resin composition is small, the active hydrogen equivalent weight (AHEW) of the component (A-2) is preferably 130 or less, more preferably 120 or less, and further preferably 110 or less. In addition, from the viewpoint of manufacturability and the like, it is preferably 80 or more, and more preferably 90 or more.

The AHEW of the component (A-2) can be determined by, for example, a titration method.

The component (A-2) is obtained from a reaction of styrene with the compound represented by General Formula (1) by a known method. More specifically, the component (A-2) is obtained from an addition reaction of styrene with a raw material polyamine in the presence of a basic catalyst such as an alkali metal, an alkali metal amide (represented by General Formula of MNRR', wherein M is an alkali metal, N is nitrogen, and R and R' are each independently hydrogen or an alkyl group), or an alkylated alkali metal, preferably at from 50 to 120°C, and more preferably at from 70 to 100°C.

In the addition reaction of styrene with the raw material polyamine, the amount of the basic catalyst used is preferably from 0.1 to 20 mol%, more preferably from 0.5 to 15 mol%, further preferably from 1.0 to 12 mol%, and even more preferably from 1.5 to 10 mol%, with the total amount of the raw material polyamine and styrene to be used being 100 mol%.

Moreover, from a point of view of obtaining the compound represented by General Formula (1-1) at a high selectivity, the amounts of styrene and the raw material polyamine used in the addition reaction are such that the mole ratio of styrene to 1 mol of the raw material polyamine is preferably in a range from 0.1 to 5.0 mol, more preferably from 0.4 to 3.0 mol, further preferably from 0.5 to 1.5 mol, and even more preferably from 0.8 to 1.2 mol.

As the component (A-2), a commercially available product such as "Gaskamine 240" available from MITSUBISHI GAS CHEMICAL COMPANY, INC. can also be used.

From a point of view of obtaining an epoxy resin composition that has high hydrogen gas barrier properties, exhibits little deterioration in the gas barrier properties even under high humidity conditions, and can achieve a long pot life, the content of the component (A-1) in the epoxy resin curing agent of the present invention is from 50 to 95 mass%, and the content of the component (A-2) is from 5 to 50 mass%. When the content of the component (A-1) in the epoxy resin curing agent is 50 mass% or more and the content of the component (A-2) is 50 mass% or less, a long pot life is easily achieved. In addition, when the content of the component (A-1) in the epoxy resin curing agent is 95 mass% or less and the content of the component (A-2) is 5 mass% or more, a deterioration in the gas barrier properties under high humidity conditions can be suppressed.

From a point of view of obtaining an epoxy resin composition that has high hydrogen gas barrier properties, exhibits little deterioration in the gas barrier properties even under high humidity conditions, and can achieve a long pot life, the content of the component (A-1) in the epoxy resin curing agent is preferably from 60 to 95 mass%, more preferably from 70 to 95 mass%, and further preferably from 75 to 92 mass%. The content of the component (A-2) in the epoxy resin curing agent is preferably from 5 to 40 mass%, more preferably from 5 to 30 mass%, and further preferably from 8 to 25 mass%.

The epoxy resin curing agent of the present invention may be a curing agent composed only of the component (A-1) and the component (A-2), or may contain another epoxy resin curing agent besides the component (A-1) and the component (A-2). Examples of the other epoxy resin curing agent include amine-based curing agents, phenol-based curing agents, acid anhydride-based curing agents, and hydrazide-based curing agents, and an amine-based curing agent is preferable from a point of view of gas barrier properties.

For example, the curing agent of the present invention may further contain a compound represented by the following General Formula (3) as a component (A-3). When the curing agent of the present invention contains the component (A-3), the gas barrier property can be further improved. 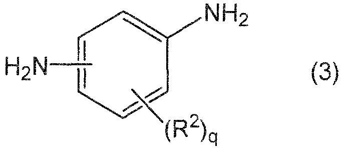 (In Formula (3), R² is an alkyl group having from 1 to 6 carbons, an alkoxy group, or an alkylthio group, q is a number from 0 to 3.)

In Formula (3), examples of the alkyl group having from 1 to 6 carbons in R² include a methyl group, an ethyl group, a n-propyl group, an isopropyl group, a n-butyl group, an isobutyl group, a sec-butyl group, a tert-butyl group, a n-pentyl group, a neopentyl group, and a n-hexyl group. Among them, an alkyl group having from 1 to 4 carbons is preferable, and an alkyl group having from 1 to 2 carbons is more preferable.

In Formula (3), the alkoxy group in R² is preferably an alkoxy group having from 1 to 4 carbons, and examples thereof include a methoxy group, an ethoxy group, an n-propoxy group, and an n-butoxy group.

In Formula (3), the alkylthio group in R² is preferably an alkylthio group having from 1 to 4 carbons, and examples thereof include a methylthio group, an ethylthio group, a propylthio group, and a butylthio group.

In Formula (3), q is preferably from 0 to 2 and more preferably 0. When q is 2, multiple R²s may be identical to or different from each other, but are preferably identical to each other.

Specific examples of the component (A-3) include 1,2-phenylenediamine, 1,3-phenylenediamine, 1,4-phenylenediamine, 4-methyl-1,2-phenylenediamine, 4-ethyl-1,2-phenylenediamine, 2-methyl-1,4-phenylenediamine, 2-ethyl-1,4-phenylenediamine, 5-methyl-1,3-phenylenediamine, 5-ethyl-1,3-phenylenediamine, dimethyltoluenediamine, diethyltoluenediamine, and dimethylthiotoluenediamine, and one type or two or more types of these can be used.

Among those described above, from a point of view of improving the hardness of a cured product of the epoxy resin composition to be obtained and from a point of view of availability, the component (A-3) is preferably at least one selected from the group consisting of 1,2-phenylenediamine, 1,3-phenylenediamine, and 1,4-phenylenediamine, and 1,3-phenylenediamine is more preferable.

When the epoxy resin curing agent of the present invention contains the component (A-3), the content of the component (A-3) in the curing agent is preferably from 1 to 30 mass%, more preferably from 2 to 25 mass%, further preferably from 3 to 20 mass%, and even more preferably from 5 to 15 mass%. When the content of the component (A-3) in the curing agent is 1 mass% or more, the curing agent is easy to contribute to the improvement of the gas barrier property of the epoxy resin composition to be obtained, and when the content is 30 mass% or less, the effect of suppressing the deterioration of the gas barrier properties under high humidity conditions and a long pot life can be maintained.

The epoxy resin curing agent of the present invention may contain an amine-based curing agent other than the components (A-1) to (A-3). Examples of the amine-based curing agent include polyamine compounds each having two or more amino groups in the molecule or a modified product thereof. Examples of the polyamine compound include chain aliphatic polyamine compounds such as ethylenediamine, diethylenetriamine, triethylenetetramine, tetraethylenepentamine, pentaethylenehexamine, hexamethylenediamine, 2-methylpentamethylenediamine, and trimethylhexamethylenediamine; aromatic ring-containing aliphatic polyamine compounds such as orthoxylylenediamine, meta-xylylenediamine (MXDA), and para-xylylenediamine (PXDA); polyamine compounds each having an alicyclic structure, such as isophoronediamine (IPDA), menthenediamine, norbomanediamine, tricyclodecanediamine, adamantanediamine, diaminocyclohexane, 1,2-bis(aminomethyl)cyclohexane, 1,3-bis(aminomethyl)cyclohexane, 1,4-bis(aminomethyl)cyclohexane, 1,4-diamino-2-methylcyclohexane, 1,4-diamino-3,6-diethylcyclohexane, diaminodiethylmethylcyclohexane, 3,3'-dimethyl-4,4'-diaminodicyclohexylmethane(bis(4-amino-3-methylcyclohexyl)methane), 3,3',5,5'-tetramethyl-4,4'-diaminodicyclohexylmethane, and 4,4'-diaminodicyclohexylmethane; aromatic polyamine compounds such as diaminodiphenyl sulfone; polyamine compounds each having a heterocyclic structure, such as N-aminoethylpiperazine and N,N'-bis(aminoethyl)piperazine; and polyether polyamine compounds. Examples of the modified product of the polyamine compound include Mannich modified products, epoxy modified products, Michael adducts, Michael addition/polycondensation products, styrene modified products (excluding the component (A-2)), and polyamide modified products of the above-mentioned compound. One type of these can be used singly or two or more types thereof can be used in combination.

However, from a point of view of obtaining an epoxy resin composition that has high hydrogen gas barrier properties, exhibits little deterioration in the gas barrier properties even under high humidity conditions, and can achieve a long pot life, the total content of the component (A-1) and the component (A-2) in the epoxy resin curing agent of the present invention is preferably 50 mass% or more, more preferably 60 mass% or more, further preferably 70 mass% or more, even more preferably 75 mass% or more, even more preferably 80 mass% or more, even more preferably 85 mass% or more, even more preferably 90 mass% or more, and 100 mass% or less.

The total content of the components (A-1) to (A-3) in the epoxy resin curing agent of the present invention is also preferably 70 mass% or more, more preferably 75 mass% or more, further more preferably 80 mass% or more, even more preferably 85 mass% or more, even more preferably 90 mass% or more, and even more preferably 95 mass% or more and 100 mass% or less.

### [Epoxy resin composition]

The epoxy resin composition of the present invention contains an epoxy resin and the epoxy resin curing agent of the present invention.

When the epoxy resin composition of the present invention contains the epoxy resin curing agent of the present invention, the epoxy resin composition has high hydrogen gas barrier properties, exhibits little deterioration in the gas barrier properties even under high humidity conditions, and can achieve a long pot life.

### <Epoxy Resin>

The epoxy resin used in the epoxy resin composition of the present invention is not particularly limited as long as it is a polyfunctional epoxy resin having two or more epoxy groups, but is preferably a polyfunctional epoxy resin that contains an aromatic ring or alicyclic structure in the molecule from a point of view of high hydrogen gas barrier properties and a point of view of suppressing deterioration in the gas barrier properties under high humidity conditions.

In addition, the epoxy resin used in the present invention preferably contains a liquid epoxy resin from a point of view of having low viscosity and being easy to be used in filament winding molding. The "liquid epoxy resin" refers to an epoxy resin having fluidity at 25°C.

As specific examples of the polyfunctional epoxy resin, mention may be made of at least one selected from the group consisting of epoxy resins each having a glycidylamino group derived from meta-xylylenediamine, epoxy resins each having a glycidylamino group derived from para-xylylenediamine, epoxy resins each having a glycidylamino group derived from 1,3-bis(aminomethyl)cyclohexane, epoxy resins each having a glycidylamino group derived from 1,4-bis(aminomethyl)cyclohexane, epoxy resins each having a glycidylamino group derived from diaminodiphenylmethane, epoxy resins each having a glycidylamino group and/or a glycidyloxy group derived from paraaminophenol, epoxy resins each having a glycidyloxy group derived from resorcinol, epoxy resins each having a glycidyloxy group derived from bisphenol A, and epoxy resins each having a glycidyloxy group derived from bisphenol F, and epoxy resins each having a glycidyloxy group derived from phenol novolak. The epoxy resin may be used singly or two or more types thereof may be used in combination.

Among those described above, from a point of view of low viscosity and high hydrogen gas barrier properties, from a point of view of suppression of decrease in pot life, and suppression of occurrence of scorching during molding, the epoxy resin preferably contains 10 to 80 mass% an epoxy resin (B1) that includes a glycidyl group derived from resorcinol and 20 to 90 mass% an epoxy resin (B2) that contains an aromatic ring and is other than (B1), and the epoxy resin (B2) more preferably contains at least one selected from the group consisting of an epoxy resin (b2-1) having a glycidyl group derived from bisphenol F and an epoxy resin (b2-2) having a glycidyl group derived from phenol novolak.

The epoxy resin (B1) having a glycidyloxy group derived from resorcinol (hereinafter, also simply referred to as "epoxy resin (B1)" or "component (B1)") has a low viscosity among epoxy resins and exhibits high hydrogen gas barrier properties. On the other hand, the epoxy resin (B1) has a low epoxy equivalent, and tends to react vigorously with the epoxy resin curing agent during heat curing and is prone to generate heat. Therefore, when the content of the epoxy resin (B1) in the epoxy resin is too large, there is a concern of decrease in pot life, and occurrence of discoloration of a cured product, scorching and the like.

Here, the epoxy resin (B2) (hereinafter, also simply referred to as "epoxy resin (B2)" or "component (B2)"), which is an epoxy resin other than the epoxy resin (B1) and contains an aromatic ring, is relatively easy to exhibit hydrogen gas barrier properties among epoxy resins, and can also suppress heat generation during heat curing due to the epoxy resin (B1). Furthermore, among the epoxy resins (B2), the epoxy resin (b2-1) having a glycidyl group derived from bisphenol F and the epoxy resin (b2-2) having a glycidyl group derived from phenol novolak do not impair the low viscosity and the high hydrogen gas barrier properties derived from the epoxy resin (B1), and hence it is conceivable that the use of the epoxy resin (B1) and the epoxy resin (B2) at a predetermined ratio enables to retain the low viscosity and the high hydrogen gas barrier properties and suppress decrease in pot life and the occurrence of scorching during molding.

### (Epoxy resin (B1))

The epoxy resin (B1) is an epoxy resin having a glycidyloxy group derived from resorcinol. When the epoxy resin contains the epoxy resin (B1), there can be obtained an epoxy resin composition having a low viscosity and capable of achieving high hydrogen gas barrier properties.

The epoxy resin (B1) is typically resorcinoldiglycidylether, and may contain an oligomer besides the resorcinoldiglycidylether.

As the epoxy resin (B1), a commercially available product such as "Denacol EX-201" available from Nagase ChemteX Corporation can be used.

The content of the epoxy resin (B1) in the epoxy resin is preferably from 10 to 80 mass%, more preferably from 20 to 80 mass%, further preferably from 30 to 80 mass%, even more preferably from 35 to 80 mass%, even more preferably from 40 to 80 mass%, even more preferably from 50 to 80 mass%, even more preferably from 60 to 80 mass%, and even more preferably from 70 to 80 mass%. When the content of the epoxy resin (B1) in the epoxy resin is 10 mass% or more, high hydrogen gas barrier properties are easily exhibited, and when the content is 80 mass% or less, decrease in pot life and the occurrence of scorching during molding can be suppressed.

### (Epoxy resin (B2))

The epoxy resin (B2) is an epoxy resin other than the epoxy resin (B1) and contains an aromatic ring.

The epoxy resin (B2) preferably contains at least one selected from the group consisting of an epoxy resin (b2-1) having a glycidyl group derived from bisphenol F and an epoxy resin (b2-2) having a glycidyl group derived from phenol novolak. It is thought that this enables to achieve low viscosity and high hydrogen gas barrier properties, as well as long pot life and to suppress the occurrence of scorching during molding.

### [Epoxy resin (b2-1)]

The epoxy resin (b2-1) is an epoxy resin having a glycidyloxy group derived from bisphenol F. The epoxy resin (b2-1) is typically bisphenol F diglycidyl ether, and may contain an oligomer besides the bisphenol F diglycidyl ether.

As the epoxy resin (b2-1), a commercially available product such as "jER807" available from Mitsubishi Chemical Corporation can be used.

### [Epoxy resin (b2-2)]

The epoxy resin (b2-2) is an epoxy resin having a glycidyl group derived from phenol novolak. The epoxy resin (b2-2) is typically a polyfunctional epoxy resin obtained by reacting a phenol novolak resin with epichlorohydrin.

As the epoxy resin (b2-2), a commercially available product such as a phenol novolak-type epoxy resin in "EPICLON" series (N-730A, N-740, N-770, N-775, N-740-80M, N-770-70M, N-865-80M) available from DIC Corporation can be used.

The epoxy resin (B2) may contain only one of the epoxy resin (b2-1) and the epoxy resin (b2-2), or may contain both of them.

The total content of the epoxy resin (b2-1) and the epoxy resin (b2-2) in the epoxy resin (B2) is preferably 50 mass% or more, more preferably 60 mass% or more, further preferably 70 mass% or more, still more preferably 80 mass% or more, still more preferably 90 mass% or more, and 100 mass% or less from a point of view of achieving low viscosity, high hydrogen gas barrier properties, and a long pot life and suppressing the occurrence of scorching during molding.

As specific examples of the epoxy resin (B2) other than the epoxy resin (b2-1) and the epoxy resin (b2-2), mention may be made of at least one selected from the group consisting of the aforementioned epoxy resins each having a glycidylamino group derived from meta-xylylenediamine, epoxy resins each having a glycidylamino group derived from para-xylylenediamine, epoxy resins each having a glycidylamino group derived from diaminodiphenylmethane, epoxy resins each having a glycidylamino group and/or a glycidyloxy group derived from paraaminophenol, and epoxy resins each having a glycidyloxy group derived from bisphenol A.

The content of the epoxy resin (B2) in the epoxy resin is preferably from 20 to 90 mass%, more preferably from 20 to 80 mass%, further preferably from 20 to 70 mass%, still more preferably from 20 to 65 mass%, still more preferably from 20 to 60 mass%, still more preferably from 20 to 50 mass%, still more preferably from 20 to 40 mass%, and still more preferably from 20 to 30 mass%. When the content of the epoxy resin (B2) in the epoxy resin is 20 mass% or more, it is easy to achieve a long pot life and to suppress the occurrence of scorching during molding, and when the content is 90 mass% or less, there is obtained an epoxy resin composition without impaired low viscosity and high hydrogen gas barrier properties result from the epoxy resin (B1).

The epoxy resin may contain an epoxy resin other than the epoxy resin (B1) and the epoxy resin (B2). Examples of the epoxy resin include aliphatic epoxy resins having no aromatic rings. Examples of the aliphatic epoxy resin having no aromatic ring include chain aliphatic epoxy resins and aliphatic epoxy resins having an alicyclic structure.

Note that, from a point of view of exhibiting high hydrogen gas barrier properties, the total content of the epoxy resin (B1) and the epoxy resin (B2) in the epoxy resin is preferably 70 mass% or more, more preferably 80 mass% or more, further preferably 90 mass% or more, still more preferably 95 mass% or more, and 100 mass% or less.

The epoxy equivalent (functional group equivalent) of the epoxy resin is preferably 500 g/eq or less, more preferably 300 g/eq or less, further preferably 250 g/eq or less, still more preferably 220 g/eq or less, still more preferably 200 g/eq or less, still more preferably 180 g/eq or less, still more preferably 160 g/eq or less, and still more preferably 150 g/eq or less from a point of view of low viscosity of the epoxy resin composition. Moreover, the epoxy equivalent is preferably 120 g/eq or more, and more preferably 125 g/eq or more from a point of view of suppressing the occurrence of scorching during molding.

### <Other components>

The epoxy resin composition of the present invention may further contain another component such as a filler, a modifying component such as a plasticizer, a flow adjusting component such as a thixotropic agent, a curing accelerator, a reactive diluent or non-reactive diluent, a pigment, a leveling agent, a tackifier, and a stress relaxation component depending on its intended use.

Among those described above, examples of the curing accelerator include phenolic compounds such as bisphenol A and styrenated phenol, and salts thereof; sulfonic acid-based compound such as p-toluenesulfonic acid and methanesulfonic acid, and salt or esterified product thereof; carboxylic acid-based compound such as salicylic acid and benzoic acid, and salt thereof; mercaptan-terminated polysulfide compound; guanidine-based compound; and alkanolamine-based compounds. One type of these can be used singly or two or more types thereof can be used in combination.

When the epoxy resin composition contains a curing accelerator, the content thereof is preferably from 0.01 to 15 mass% and more preferably from 0.1 to 10 mass% in the solid content of the epoxy resin composition. Note that "solid content of the epoxy resin composition" is an amount excluding water and organic solvents from total amount of the epoxy resin composition.

Among those described above, examples of the stress relaxation component include elastomer particles such as silicone elastomer particles, butyl acrylate elastomer particles, polyether amine elastomer particles, and other rubber particles. In addition, a liquid rubber component such as epoxidized polybutadiene can also be used. Examples of commercially available products of the stress relaxation component include "Kane Ace" B series, FM series, M series, and MX series available from KANEKA CORPORATION, and "EBOLEAD PB3600" and "EBOLEAD PB4700" which are liquid epoxidized polybutadienes available from Daicel Corporation.

When the epoxy resin composition contains a stress relaxation component, the content thereof is preferably from 0.1 to 15 mass% and more preferably from 0.5 to 10 mass% in the solid content of the epoxy resin composition.

### <Solvent>

The epoxy resin composition of the present invention can further contain a solvent from a point of view of enhancing the impregnation property into reinforcing fibers.

Examples of the solvent include alcohol solvents such as methanol, ethanol, 1-propanol, 2-propanol, 1-butanol, 2-butanol, 2-methoxyethanol, 2-ethoxyethanol, 2-propoxyethanol, 2-butoxyethanol, 1-methoxy-2-propanol, 1-ethoxy-2-propanol, and 1-propoxy-2-propanol; ester solvents such as ethyl acetate and butyl acetate; ketone solvents such as acetone, methylethylketone, and methylisobutylketone; ether solvents such as diethyl ether and diisopropyl ether; hydrocarbon solvents such as toluene, and one type or two or more types of these can be used.

From a point of view of the solubility of the blending component and from a point of view of the easiness of removing the solvent, the solvent is preferably at least one selected from the group consisting of alcohol solvents, ester solvents, ketone solvents, and hydrocarbon solvents, each of which having 8 or less carbons, and more preferably at least one selected from the group consisting of methanol, ethanol, 1-propanol, 2-propanol, 1-butanol, 2-butanol, ethyl acetate, methylethylketone, methylisobutylketone, and toluene.

### <Content>

The content ratio of the epoxy resin and the epoxy resin curing agent in the epoxy resin composition of the present invention is such that the ratio of the number of active hydrogens in the epoxy resin curing agent to the number of epoxy groups in the epoxy resin (the number of active hydrogens in the epoxy resin curing agent/the number of epoxy groups in the epoxy resin) is preferably from 1/0.5 to 1/2, more preferably from 1/0.75 to 1/1.5, and further preferably from 1/0.8 to 1/1.2. The ratio needs to be within the above-mentioned range at the final, and may be fixed during molding of the epoxy resin composition or may be varied during molding.

The content of the epoxy resin in the epoxy resin composition of the present invention is not limited as long as the content ratio of the epoxy resin and the epoxy resin curing agent is preferably within the above-mentioned range, but is preferably from 40 to 90 mass%, more preferably from 50 to 85 mass%, and further preferably from 60 to 80 mass% in the solid content of the epoxy resin composition from a point of view of exhibiting low viscosity and high hydrogen gas barrier properties.

When the epoxy resin composition does not contain a solvent, the content of the epoxy resin in the epoxy resin composition is preferably from 40 to 90 mass%, more preferably from 50 to 85 mass%, and further preferably from 60 to 80 mass%.

The content of the epoxy resin curing agent in the epoxy resin composition of the present invention is not limited as long as the ratio of the epoxy resin content and the epoxy resin curing agent content is preferably within the above-mentioned range, but is preferably from 10 to 60 mass%, more preferably from 15 to 50 mass%, and further preferably from 20 to 40 mass% from a point of view of exhibiting low viscosity and high hydrogen gas barrier properties. When the epoxy resin composition does not contain a solvent, the content of the epoxy resin curing agent in the epoxy resin composition is preferably from 10 to 60 mass%, more preferably from 15 to 50 mass%, and further preferably from 20 to 40 mass%.

The total content of the epoxy resin and the epoxy resin curing agent in the epoxy resin composition of the present invention is preferably 70 mass% or more, more preferably 80 mass% or more, further preferably 90 mass% or more, and still more preferably 95 mass% or more and 100 mass% or less in the solid content of the epoxy resin composition from a point of view of effectively exhibiting the effect of the present invention.

When the epoxy resin composition contains a solvent, the content of the solvent is not particularly limited, but is preferably 5 mass% or more, more preferably 10 mass% or more, and further preferably 15 mass% or more in the epoxy resin composition from a point of view of enhancing the impregnation into reinforcing fibers, and is preferably 80 mass% or less and more preferably 70 mass% or less from a point of view of easiness of removing the solvent.

The epoxy resin composition of the present invention may be a solvent-free type composition that contains substantially no solvents. The solvent-free type epoxy resin composition means that the content of the solvent in the epoxy resin composition is preferably less than 5 mass%, more preferably 2 mass% or less, further preferably 1 mass% or less, still more preferably 0.5 mass% or less, and still more preferably 0 mass%.

### <Hydrogen gas permeation coefficient>

The cured product of the epoxy resin composition of the present invention exhibits high hydrogen gas barrier properties. The cured product of the epoxy resin composition having a thickness of 1 mm has a hydrogen gas permeation coefficient of preferably 1.0 × 10⁻¹⁰ [cc•cm/(cm²•sec•cmHg)] or less, more preferably 8.0 × 10⁻¹¹ [cc•cm/(cm²•sec•cmHg)] or less, further preferably 7.0 × 10⁻¹¹ [cc•cm/(cm²•sec•cmHg)] or less, and still more preferably 5.0 × 10⁻¹¹[cc•cm/(cm²•sec•cmHg)] or less.

The hydrogen gas permeation coefficient of the cured product of the epoxy resin composition can be measured by the method described in Examples under a dry condition at 23°C.

### <Oxygen permeability coefficient>

The cured product of the epoxy resin composition of the present invention exhibits high oxygen barrier properties. Specifically, the oxygen permeability coefficient of the cured product of the epoxy resin composition having a thickness of 1 mm in a dry state at 23°C is preferably 1.5 [cc•cm/(cm²•sec•cmHg)] or less, more preferably 1.0 [cc•cm/(cm²•sec•cmHg)] or less, further preferably 0.8 [cc•cm/(cm²•sec•cmHg)] or less, and still more preferably 0.6 [cc•cm/(cm²•sec•cmHg)] or less.

The oxygen permeability coefficient of the cured product of the epoxy resin composition can be measured by the method described in Examples under a dry condition at 23°C.

### <Pot life>

The epoxy resin composition of the present invention has a long pot life (working life). For example, the pot life of the epoxy resin composition at 45°C is preferably 50 minutes or more, more preferably 60 minutes or more, further preferably 120 minutes or more, and still more preferably 150 minutes or more. The pot life of the epoxy resin composition can be measured specifically by the method described in Examples.

### <Viscosity>

The epoxy resin composition of the present invention preferably has a low viscosity from a point of view of being used in filament winding molding. Specifically, the viscosity of the epoxy resin composition at 60°C is preferably 1 Pa•s or less, more preferably 0.8 Pa•s or less, and further preferably 0.5 Pa•s or less. The lower limit of the viscosity is not particularly limited, but is usually 50 mPa•s or higher. The viscosity of the epoxy resin composition can be measured with an E-type viscometer.

The method of preparing the epoxy resin composition of the present invention is not particularly limited, and the epoxy resin composition of the present invention can be prepared by mixing the epoxy resin, the epoxy resin curing agent, and other components used as necessary by using known methods and equipment. The order of mixing the components to be contained in the epoxy resin composition is also not particularly limited.

From a point of view of avoiding the progress of gelation before use, the components to be contained in the epoxy resin composition are contacted and mixed with each other preferably immediately before use. The temperature when mixing the components to be contained in the epoxy resin composition can be appropriately adjusted depending on the viscosity of the epoxy resin, but from a point of view of suppressing an increase in viscosity, the temperature is preferably 120°C or lower, more preferably 100°C or lower, and from a point of view of miscibility of the epoxy resin, the temperature is preferably 20°C or higher, more preferably 25°C or higher. The mixing time is preferably in the range from 0.1 to 15 minutes, more preferably from 0.2 to 10 minutes, and further preferably from 0.3 to 5 minutes.

### [Cured product]

The cured product of the epoxy resin composition of the present invention (hereinafter, also simply referred to as "cured product of the present invention") is obtained by curing the above-described epoxy resin composition of the present invention by a known method. The curing conditions of the epoxy resin composition are appropriately selected according to the intended use and form, and are not particularly limited.

The form of the cured product of the present invention is also not particularly limited, and can be selected according to the intended use. For example, when the intended use of the epoxy resin composition is a coating material, the cured product of the composition is usually in the form of a film. Note that, from a point of view of effectively exhibiting the effect of the present invention, the cured product of the present invention is preferably a matrix resin of a fiber-reinforced composite material described later.

### [Fiber-reinforced composite material]

The fiber-reinforced composite material of the present invention (hereinafter, also simply referred to as "composite material") contains a cured product of the epoxy resin composition and reinforcing fibers, and can be obtained by impregnating the epoxy resin composition into the reinforcing fibers and then curing the composition. When the fiber-reinforced composite material of the present invention contains a cured product of the epoxy resin composition, the composite material has high barrier properties against hydrogen, and exhibits little deterioration in the gas barrier properties even under high humidity conditions.

Examples of the form of the reinforcing fibers include short fibers, long fibers, and continuous fibers. Among them, from a point of view of the resultant prepreg being used as a component material of a high-pressure gas container described later, long fibers or continuous fibers are preferable, and continuous fibers are more preferable.

Note that, in the present specification, the short fibers refer to fibers having a fiber length of 0.1 mm or more and less than 10 mm, and the long fibers refer to fibers having a fiber length of 10 mm or more and 100 mm or less. The continuous fiber refers to a fiber bundle having a fiber length of more than 100 mm.

Examples of the shape of the continuous fiber include various forms such as a unidirectional (UD) material in which monofilaments or multifilaments are arranged in one direction or so as to intersect alternately, a fabric such as a knitted fabric, a nonwoven fabric, and a mat.

From a point of view of being used in filament winding molding, the shape of the continuous fiber is preferably a tow or a tape, and more preferably a tow. The number of continuous fiber bundles (the number of filaments) included in the tow is preferably from 3 K to 50 K, and more preferably from 6 K to 40 K from a point of view of easiness to obtain high strength and high elastic modulus.

In the continuous fiber, the average fiber length of the continuous fiber bundle is not particularly limited, but is preferably from 1 to 10000 m, and more preferably from 100 to 10000 m from a point of view of molding processability.

The average fineness of the continuous fiber bundle is preferably from 50 to 2000 tex (g/1000 m), more preferably from 200 to 1500 tex, and further preferably from 500 to 1500 tex from a point of view of molding processability and from a point of view of easiness to obtain high strength and high elastic modulus.

The average tensile modulus of the continuous fiber bundle is preferably from 50 to 1000 GPa.

Examples of the material of the reinforcing fiber include inorganic fibers such as carbon fibers, glass fibers, basalt fibers, metal fibers, boron fibers, and ceramic fibers; organic fibers such as aramid fibers, polyoxymethylene fibers, aromatic polyamide fibers, polyparaphenylenebenzobisoxazole fibers, and ultra-high-molecular-weight polyethylene fibers. Among them, inorganic fibers are preferable from a point of view of obtaining high strength, and at least one selected from the group consisting of carbon fibers, glass fibers, and basalt fibers is preferable from a point of view of light weight and high strength, and high elastic modulus, and carbon fibers are more preferable from a point of view of strength and light weight. That is, the fiber-reinforced composite material of the present invention is more preferably a carbon fiber-reinforced composite material (CFRP) containing a cured product of the epoxy resin composition and carbon fibers.

Examples of the carbon fibers include polyacrylonitrile-based carbon fibers and pitch-based carbon fibers. In addition, carbon fibers made from plant-based raw materials such as lignin and cellulose can also be used.

The reinforcing fiber may be treated with a treatment agent. Examples of the treatment agent include a surface treatment agent or a sizing agent.

The surface treatment agent is preferably a silane coupling agent. Examples of the silane coupling agent include silane coupling agents each having a vinyl group, silane coupling agents each having an amino group, silane coupling agents each having an epoxy group, silane coupling agents each having a (meth)acrylic group, and silane coupling agents each having a mercapto group.

Examples of the sizing agent include urethane-based sizing agents, epoxy-based sizing agents, acrylic-based sizing agents, polyester-based sizing agents, vinyl ester-based sizing agents, polyolefin-based sizing agents, polyether-based sizing agents, and carboxylic acid-based sizing agents, and one type thereof can be used, or two or more types thereof can be used in combination. Examples of combinations of two or more types of the sizing agents include urethane/epoxy-based sizing agents, urethane/acrylic-based sizing agents, and urethane/carboxylic acid-based sizing agents.

From a point of view of improving the interfacial adhesiveness to the cured product of the epoxy resin composition and further improving the strength and impact resistance of the resultant prepregs and composite materials, the amount of the treatment agent is preferably from 0.001 to 5 mass%, more preferably from 0.1 to 3 mass%, and further preferably from 0.5 to 2 mass%, relative to the amount of the reinforcing fibers.

A commercially available product can also be used as the reinforcing fiber. Examples of commercially available continuous carbon fibers (tows) include TORAYCA YARN such as each series of "T300", "T300B", "T400HB", "T700S", "T700SC", "T800SC", "T800HB", "T830HB", "T1000GB", "T100GC", "M35JB", "M40JB", "M46JB", "M50JB", "M55J", "M55JB", "M60JB", "M30SC", and "Z600", which are available from Toray Industries, Inc.; TENAX such as "HTA40" series, "HTS40" series, "HTS45" series, "HTS45P12" series, "STS40" series, "UTS50" series, "ITS50" series, "ITS55" series, "IMS40" series, "IMS60" series, "IMS65" series, "IMS65P12" series, "HMA35" series, "UMS40" series, "UMS45" series, "UMS55" series, and "HTS40MC" series, which are available from TEIJIN LIMITED; and carbon fiber tows such as PYROFIL "HT", "IM", "HM" series, GRAFIL "HT" series and "DIALEAD" series, which are available from Mitsubishi Chemical Corporation.

Furthermore, examples of commercially available continuous carbon fibers other than tows include carbon fiber fabrics such as TORAYCA CLOTH "COG142", "CO6151B", "CO6343", "CO6343B", "CO6347B", "CO6644B", "CK6244C", "CK6273C", "CK6261C", "UT70" series, "UM46" series, "BT70" series, "T300" series, "T300B" series, "T400HB" series, "T700SC" series, "T800SC" series, "T800HB" series, "T1000GB" series, "M35JB" series, "M40JB" series, "M46JB" series, "M50JB" series, "M55J" series, "M55JB" series, "M60JB" series, "M30SC" series, "Z600GT" series, which are available from Toray Industries, Inc.; and carbon fiber fabrics such as PYROFIL "TR3110M", "TR3523M", "TR3524M", "TR6110HM", "TR6120HM", "TRK101M", "TRK510M", "TR3160TMS", "TRK979PQRW", "TRK976PQRW", "TR6185HM" and "TRK180M", which are available from Mitsubishi Chemical Corporation.

### <Content>

From a point of view of obtaining high strength and high elastic modulus, the content of the reinforcing fibers in the fiber-reinforced composite material is within a range such that the volume fraction of the reinforcing fibers in the fiber-reinforced composite material is preferably 0.10 or more, more preferably 0.20 or more, further preferably 0.30 or more, and still more preferably 0.40 or more. From a point of view of hydrogen gas barrier properties, impact resistance, and molding processability, the content of the reinforcing fibers in the fiber-reinforced composite is within a range such that the volume fraction is preferably 0.85 or less, more preferably 0.80 or less, and further preferably 0.70 or less.

The volume fraction Vf of the reinforcing fibers in the fiber-reinforced composite material can be calculated from the following formula.
Vf = {(mass (g) of reinforcing fibers)/(specific gravity of reinforcing fibers)}/[{(mass (g) of reinforcing fibers)/(specific gravity of reinforcing fibers)} + {(mass (g) of cured product of epoxy resin composition)/(specific gravity of cured product of epoxy resin composition)}]

<Method of producing fiber-reinforced composite material>

The method of producing a fiber-reinforced composite material is not particularly limited as long as the method includes a step in which the epoxy resin composition is impregnated into reinforcing fibers, and then the epoxy resin composition is cured and molded.

The epoxy resin composition of the present invention has a long pot life, and hence is suitable as an epoxy resin composition for tow-preg used in filament winding molding. From this point of view, the fiber-reinforced composite material is preferably obtained by filament winding molding. That is, the method of producing a fiber-reinforced composite material of the present invention is preferably a method including a filament winding molding process.

In the filament winding molding process, first, an epoxy resin composition containing an epoxy resin, an epoxy resin curing agent, and a solvent to be used as necessary is preferably impregnated into reinforcing fiber tow, followed by subjecting to a drying step to remove the solvent. Thereafter, the tow impregnated with the epoxy resin composition is wrapped around the outer surface of a balloon, mandrel, or liner and then heat cured, thereby enabling to produce a composite of the desired shape.

As a method of producing a fiber-reinforced composite material other than the filament winding molding process, a known blading process, a 3D printer process, or the like can also be used.

The conditions for the heat curing of the epoxy resin composition are not particularly limited, and the heat curing is performed by a known method at a temperature and time sufficient to cure the epoxy resin composition. For example, the curing temperature can be selected within a range from 10 to 180°C and the curing time can be selected within a range from 5 minutes to 200 hours, and from a point of view of productivity, the curing temperature is preferably within a range from 80 to 180°C and the curing time is preferably within a range from 10 minutes to 5 hours.

The composite material of the present invention is suitably used for a molded body having a hollow shape such as a pipe, a shaft, a cylinder, or a tank from a point of view of manufacturing the composite material by a filament winding molding process. This composite material is particularly suitable as a material for forming a high-pressure gas container because the composite material is excellent in hydrogen gas barrier properties and exhibits little deterioration in the gas barrier properties even under high humidity conditions.

### [High-pressure gas container]

The high-pressure gas container of the present invention contains the fiber-reinforced composite material. The high-pressure gas container of the present invention needs to be configured such that at least a part thereof is made of the fiber-reinforced composite material. For example, in the case of a high-pressure gas container having a liner and an outer layer provided so as to cover the outer surface of the liner, examples thereof include a high-pressure gas container in which at least one of the liner and the outer layer is made of the fiber-reinforced composite material. In the case of a linerless high-pressure gas container, examples thereof include the entire container being made of the fiber-reinforced composite material.

As specific aspects of the high-pressure gas container containing the fiber-reinforced composite material, examples thereof include (1) a configuration including: a metallic liner; and an outer layer made of the fiber-reinforced composite material of the present invention, (2) a configuration including: a resin liner; and an outer layer made of the fiber-reinforced composite material of the present invention, (3) a configuration including: a liner made of the fiber-reinforced composite material of the present invention; and an outer layer made of a material other than the fiber-reinforced composite material, and (4) a configuration of only a (linerless) container made of the fiber-reinforced composite material of the present invention.

As the metal used in the "metallic liner" in the aspect (1), examples thereof include light alloys such as aluminum alloys and magnesium alloys.

The resin used for the "resin liner" in the aspect (2) is not particularly limited as long as it is a resin excellent in hydrogen gas barrier properties and pressure resistance, and examples thereof include thermoplastic resins, cured products of thermosetting resins, and cured products of photocurable resins. Among them, a thermoplastic resin is preferable from a point of view of enabling to easily mold the liner.

Examples of the thermoplastic resin include polyamide resins, polyester resins, polyolefin resins, polyimide resins, polycarbonate resins, polyetherimide resins, polyamideimide resins, polyphenylene etherimide resin, polyphenylene sulfide resins, polysulfone resins, polyethersulfone resins, polyarylate resins, liquid crystal polymers, polyetheretherketone resins, polyetherketone resins, polyetherketoneketone resins, polyetheretherketoneketone resins, and polybenzimidazole resins, and one type thereof can be used, or two or more types thereof can be used in combination.

From a point of view of hydrogen gas barrier properties and pressure resistance, at least one selected from the group consisting of polyamide resins and polyolefin resins is preferable among the thermoplastic resins, and a polyamide resin is more preferable.

Besides, from a point of view of enhancing impact resistance, the resin liner may contain the above-described stress relaxation component.

As the "outer layer composed of a material other than the fiber-reinforced composite material" in the aspect (3), preferable examples thereof include an outer layer composed of a fiber-reinforced composite material other than the fiber-reinforced composite material of the present invention from a point of view of improved reinforcement.

In the aspects (1) to (3), the outer layer can be formed so as to cover the outer surface of the main body portion of the liner without any gaps.

The outer layer may be provided directly on the outer surface of the liner. Alternatively, one or two or more additional layers may be provided on the outer surface of the liner, and the outer layer may be provided on the surface of the additional layer. For example, an adhesive layer may be provided between the liner and the outer layer in order to improve adhesion between the liner and the outer layer.

In a case where the high-pressure gas container is in the aspect of (1) or (2), the thickness of the outer layer made of the fiber-reinforced composite material of the present invention can be appropriately selected according to, for example, the capacity and shape of the high-pressure gas container, but the thickness of the outer layer is preferably 100 µm or more, more preferably 200 µm or more, further preferably 400 µm or more from a point of view of imparting high hydrogen gas barrier properties and impact resistance, and is preferably 80 mm or less, more preferably 60 mm or less from a point of view of downsizing and weight reduction of the high-pressure gas container.

In a case where the high-pressure gas container is in the aspect of (3), the thickness of the liner made of the fiber-reinforced composite material of the present invention can be appropriately selected according to, for example, the capacity and shape of the high-pressure gas container, but the thickness of the liner is preferably 100 µm or more, more preferably 200 µm or more, further preferably 400 µm or more from a point of view of hydrogen gas barrier properties and pressure resistance, and is preferably 60 mm or less, more preferably 40 mm or less from a point of view of downsizing and weight reduction of the high-pressure gas container.

In a case where the high-pressure gas container is in the aspect of (4), the thickness of the container made of the fiber-reinforced composite material according to an embodiment of the present invention can be appropriately selected according to, for example, the capacity and shape of the high-pressure gas container, but the thickness of the container is preferably 1 mm or more, more preferably 2 mm or more, further preferably 5 mm or more from a point of view of hydrogen gas barrier properties and pressure resistance, and is preferably 80 mm or less, more preferably 60 mm or less from a point of view of downsizing and weight reduction of the high-pressure gas container.

From a point of view of obtaining high strength and high elastic modulus, the content of the reinforcing fibers in the liner, in the outer layer, or in the high-pressure gas container made of the fiber-reinforced composite material of the present invention is within a range such that the volume fraction of the reinforcing fibers is preferably 0.10 or more, more preferably 0.20 or more, further preferably 0.30 or more, and still more preferably 0.40 or more. From a point of view of hydrogen gas barrier properties, impact resistance, and molding processability, the volume fraction of the reinforcing fibers is preferably 0.85 or less, more preferably 0.80 or less, further preferably 0.75 or less, and still more preferably 0.70 or less.

The volume fraction of the reinforcing fiber can be calculated by the same method as described above.

Among those described above, the high-pressure gas container is preferably any one of the aspects (2), (3), and (4), and more preferably the aspect (3) or (4) from a point of view of light weight and a point of view of high barrier properties against hydrogen required for the fiber-reinforced composite material.

Note that the high-pressure gas container may further include parts, such as a connector and a valve, which are made of a material other than the fiber-reinforced composite material. Furthermore, an optional layer such as a protective layer, a coating layer, and an antirust-containing layer may be formed on the surface of the high-pressure gas container.

The gas to be stored in the high-pressure gas container needs to be in gaseous state at 25°C and 1 atm, and examples thereof include oxygen, carbon dioxide, nitrogen, argon, LPG, a substitute for CFCs, and methane, besides hydrogen. Among them, hydrogen is preferable from a point of view of the effectiveness of the present invention.

As a method of producing the high-pressure gas container of the present invention, the production method described in the method of producing a fiber-reinforced composite material described above can be used.

In a case where the high-pressure gas container is in the aspect (1) or (2), a reinforcing fiber tow impregnated with an epoxy resin composition is wound so as to cover the outer surface of a metallic or resin liner by using a filament winding molding process, and then the reinforcing fiber tow is heat cured to form an outer layer made of the fiber-reinforced composite material and the high-pressure gas container can be manufactured.

In a case where the high-pressure gas container is in the aspect (3) or (4), the reinforcing fiber tow impregnated with the epoxy resin composition is molded into a container shape by a filament winding molding process, a blading process, a 3D printer process, for example, followed by heat curing and a high-pressure gas container can be manufactured.

### Examples

Hereinafter, the present invention will be described in detail with reference to Examples and Comparative Examples, but the present invention is not limited to the following Examples. Note that the measurements and evaluations in the present Examples were performed by the following methods.

### <Hydrogen gas permeation coefficient [cc•cm/(cm²•sec•cmHg]]>

The epoxy resin composition prepared in each example was poured into a mold (120 mm × 120 mm × 1 mm) coated with a release agent ("FREKOTE 770-NC" available from Henkel AG & Co. KGaA), and heated and cured at 120°C for 1 hour to afford a plate-shaped test piece (1 mm in thickness). For this test piece, the hydrogen gas permeation coefficient [cc•cm/(cm²•scc•cmHg)] thereof was measured in a dry state at 23°C by a differential pressure method with a gas permeation analysis system ("GTR-30X" available from GTR Tec Corporation). In the table, measurements are indicated in exponential notation. Specifically, "9.8 E-11" means "9.8 × 10⁻¹¹".

### <Oxygen permeability coefficient [cc•cm/(cm²•sec•cmHg]]>

The epoxy resin composition prepared in each example was poured into a mold (120 mm × 120 mm × 1 mm) coated with a release agent ("FREKOTE 770-NC" available from Henkel AG & Co. KGaA), and heated and cured at 120°C for 1 hour to afford a plate-shaped test piece (1 mm in thickness). For this test piece, the oxygen permeability coefficient thereof [cc•cm/(cm²•sec•cmHg)] was measured in each of a dry state (0% relative humidity) and a high humidity state (80% relative humidity) at 23°C by a differential pressure method with a gas permeation analysis system ("GTR-30X" manufactured by GTR Tec Corporation).

### <Rate of increase in oxygen permeability coefficient>

The rate of increase in oxygen permeability coefficient under high humidity conditions was calculated by the following equation. A smaller value means that the oxygen barrier property is less deteriorated under high humidity conditions.
Rate (%) of increase in oxygen permeability coefficient = [(Oxygen permeability coefficient at 23°C and 80% relative humidity) - (Oxygen permeability coefficient at 23°C and 0% relative humidity)]/(Oxygen permeability coefficient at 23°C and 0% relative humidity) × 100

### <Pot life>

The initial viscosity at 45°C of the epoxy resin composition prepared in each example was measured, and then 10 g of the epoxy resin composition was placed in a plastic cup (46 mm in diameter) and stored at 45°C. The time [min] during which the viscosity of the epoxy resin composition became twice or more the initial viscosity was measured and presented in the table.

The viscosity of the epoxy resin composition was measured with an E-type viscometer "TVE-22H type viscometer (cone plate type)" (manufactured by Toki Sangyo Co., Ltd).

### <Appearance of molded body>

The epoxy resin composition prepared in each example was diluted with methylethylketone to prepare a 50 mass% solution thereof. Moreover, unidirectional non-crimp fibers "UT 70-30G" (300 g/m²) available from Toray Industries, Inc. was used as continuous reinforcing fibers, a molded body (fiber-reinforced composite material) was prepared by the following method, and the presence or absence of occurrence of scorching was evaluated.

The 50 mass% solution of the epoxy resin composition was impregnated into the fiber, and then the fiber was heated at 80°C for 20 minutes to remove the solvent, thereby preparing a prepreg. A total six layers of the resultant prepregs were stacked so the filament directions intersect with each other alternately (0°/90°/0°/90°/0°/90°). This stack was subjected to heating- and-pressing forming under the conditions of a temperature of 160°C and a pressure of 0.3 MPa for 2 hours with a vacuum press machine to prepare a molded body having a volume fraction Vf of reinforcing fibers of 0.50 and a thickness of 4 mm. The appearance of the resultant molded body was visually observed and evaluated according to the following criteria.

### (Evaluation criteria)

A: There is no scorching or discoloration in the molded body, and the appearance is good.

B: Discoloration is observed in the molded body, but scorching is substantially suppressed.

C: Scorching is observed in the molded body, the color of the molded body turned into brown and the appearance of the molded body is impaired.

### Example 1 (Preparation and evaluation of epoxy resin composition)

A reaction composition ("KAYAHARD AA" available from Nippon Kayaku Co., Ltd.) containing a polycondensation reaction product (3,3'-diethyl-4,4'-diaminodiphenylmethane) of 2-ethylaniline and formaldehyde was used as the component (A-1), and a reaction composition ("Gaskamine 240" available from MITSUBISHI GAS CHEMICAL COMPANY, INC.) containing a reaction product of styrene and meta-xylylenediamine was used as the component (A-2).

Resorcinol diglycidyl ether ("Denacol EX-201" available from Nagase ChemteX Corporation) as the component (B1) and bisphenol F diglycidyl ether ("jER807" available from Mitsubishi Chemical Corporation) as the component (b2-1) were used as epoxy resins.

The above-mentioned components were blended and mixed in parts by mass presented in Table 1 to afford an epoxy resin composition. The ratio of the number of active hydrogens in the epoxy resin curing agent to the number of epoxy groups in the epoxy resin (the number of active hydrogens in the epoxy resin curing agent/the number of epoxy groups in the epoxy resin) was 1/1.

The resultant epoxy resin composition was evaluated by the above-described method. The results are presented in Table 1.

### Examples 2 to 10, Comparative Examples 1 to 2

An epoxy resin composition was prepared and evaluated in the same manner as in Example 1 except that the types and blending amounts of the blending components were changed as presented in Table 1. The results are presented in Table 1.

Note that the blending amounts (parts by mass) in Table 1 each are the amount of the active ingredient.

### [Table 1]

**Table 1**

| (parts by mass) | | Functional group equivalent (g/eq) | Examples | | | | | | | | | | Comparative Examples | |
|---|---|---|---|---|---|---|---|---|---|---|---|---|---|---|
| | | | 1 | 2 | 3 | 4 | 5 | 6 | 7 | 8 | 9 | 10 | 1 | 2 |
| Epoxy resin | (B1) Denacol EX-201 *1 | 117 | 10 | 40 | 40 | 80 | 40 | 40 | 40 | 40 | | 90 | 40 | 40 |
| | (b2-1)jER807 *2 | 168 | 90 | 60 | 60 | 20 | | 30 | 60 | 55 | 100 | 10 | 60 | 60 |
| | (b2-2) EPICLON N730-A *3 | 176 | | | | | 60 | 30 | | | | | | |
| Epoxy resin curing agent | (A-1) KAYAHARD AA *4 | 64 | 37.3 | 42.2 | 27.8 | 48.8 | 41.2 | 41.7 | 33.0 | 43.2 | 35.6 | 50.4 | 45.1 | 23.3 |
| | (A-2) G-240 *5 | 103 | 4.1 | 4.7 | 27.8 | 5.4 | 4.6 | 4.6 | 4.1 | 4.8 | 4.0 | 5.6 | | 34.9 |
| | (A-3) 1,3-phenylenediamine *6 | 27 | | | | | | | 4.1 | | | | | |
| Stress relaxation component | Kane Ace MX136 *7 | - | | | | | | | | 5 | | | | |
| Content (mass%) of (A-1) in epoxy resin curing agent | | | 90.0 | 90.0 | 50.0 | 90.0 | 90.0 | 90.0 | 80.1 | 90.0 | 90.0 | 90.0 | 100.0 | 40.0 |
| Content (mass%) of (A-2) in epoxy resin curing agent | | | 10.0 | 10.0 | 50.0 | 10.0 | 10.0 | 10.0 | 9.95 | 10.0 | 10.0 | 10.0 | | 60.0 |
| Content (mass%) of (A-3) in epoxy resin curing agent | | | | | | | | | 9.95 | | | | | |
| Number of active hydrogens in curing agent/Number of epoxy groups in epoxy resin | | | 1/1 | 1/1 | 1/1 | 1/1 | 1/1 | 1/1 | 1/1 | 1/1 | 1/1 | 1/1 | 1/1 | 1/1 |
| Content (mass%) of epoxy resin in epoxy resin composition | | | 70.7 | 68.1 | 64.3 | 64.8 | 68.6 | 68.3 | 70.8 | 64.2 | 71.7 | 64.1 | 68.9 | 63.2 |
| Content (mass%) of epoxy resin curing agent in epoxy resin composition | | | 29.3 | 31.9 | 35.7 | 35.2 | 31.4 | 31.7 | 29.2 | 32.4 | 28.3 | 35.9 | 31.1 | 36.8 |
| Evaluation results | Hydrogen gas permeation coefficient of cured product | (cc•cm/cm²•sec•cmHg) | 9.8E-11 | 7.3E-11 | -7.1E-11 | 3.0E-11 | 7.2E-11 | 7.2E-11 | 6.8E-11 | 9.6E-11 | 1.2E-10 | -2.5E-11 | 7.5E-11 | 7.0E-11 |
| | Oxygen permeability coefficient of cured product (0% RH) | (cc•cm/cm²•sec•cmHg) | 0.92 | 0.69 | 0.68 | 0.29 | 0.68 | 0.68 | 0.64 | 0.90 | 1.13 | 0.24 | 0.93 | 0.66 |
| | Oxygen permeability coefficient (80% RH) of cured product | (cc•cm/cm²•sec•cmHg) | 1.24 | 0.92 | 0.77 | 0.38 | 0.91 | 0.91 | 0.86 | 1.20 | 1.54 | 0.31 | 1.39 | 0.74 |
| | Rate of increase in oxygen permeability coefficient | % | 35 | 33 | 13 | 31 | 34 | 34 | 34 | 33 | 36 | 29 | 50 | 12 |
| | Pot life (45°C) | min | 195 | 179 | 61 | 168 | 175 | 173 | 186 | 180 | 192 | 160 | 285 | 41 |
| | Appearance of molded body | - | A | A | A | A | A | A | A | A | A | C | A | A |

The components listed in Table 1 are as follows.

### <Epoxy Resin>

*1: (B1) Denacol EX-201, resorcinol diglycidyl ether, "Denacol EX-201" available from Nagase ChemteX Corporation, epoxy equivalent: 117 g/eq
*2: (b2-1) jER807, bisphenol F diglycidyl ether, "jER807" available from Mitsubishi Chemical Corporation, epoxy equivalent: 168 g/eq
*3: (b2-2) EPICLON N730-A, phenol novolak-type epoxy resin, "EPICLON N730-A" available from DIC Corporation, epoxy equivalent: 176 g/eq

### <Epoxy resin curing agent>

*4: (A-1) KAYAHARD AA, reaction composition containing polycondensation reaction product of 2-ethylaniline and formaldehyde (3,3'-diethyl-4,4'-diaminodiphenylmethane), "KAYAHARD AA" available from Nippon Kayaku Co., Ltd., purity >95 mass%, AHEW: 64
*5: (A-2) G-240, a reaction composition containing a reaction product of styrene and meta-xylylenediamine, "Gaskamine 240" available from MITSUBISHI GAS CHEMICAL COMPANY, INC., AHEW: 103
*6: (A-3) 1,3 phenylenediamine, available from Tokyo Chemical Industry Co., Ltd., AHEW: 27

### <Stress relaxation component>

*7: Kane Ace MX136, liquid masterbatch in which core-shell rubber particles (polybutadiene) are dispersed at a concentration of 25% in a bisphenol F-type epoxy resin, "Kane Ace MX136" available from KANEKA CORPORATION.

From Table 1, it can be seen that the cured product of the epoxy resin composition containing the epoxy resin curing agent of the present invention has high hydrogen gas barrier properties, and exhibits little decrease in oxygen barrier property even under high humidity conditions. In addition, the resultant epoxy resin composition has a long pot life.

In contrast, the epoxy resin composition of Comparative Example 1, in which the epoxy resin curing agent containing only the component (A-1) was used as the epoxy resin curing agent, exhibited deteriorated gas barrier properties under high humidity conditions. Furthermore, a sufficient pot life was not able to be obtained from the epoxy resin composition of Comparative Example 2, in which was used the epoxy resin curing agent having the contents of the component (A-1) and the component (A-2) out of the specified range of the present invention.

### Industrial Applicability

According to the present invention, it is possible to provide an epoxy resin curing agent, an epoxy resin composition, a cured product thereof, a fiber-reinforced composite material, and a high-pressure gas container including the fiber-reinforced composite material, which have high hydrogen gas barrier properties, exhibit little deterioration in the gas barrier properties even under high humidity conditions, and can achieve a long pot life. The high-pressure gas container can be manufactured through filament winding molding, and it is also possible to be made into a linerless high-pressure gas container. Furthermore, since the high-pressure gas container has high hydrogen gas barrier properties, it is suitable as a container for high-pressure hydrogen storage.

## Claims

1. An epoxy resin curing agent, comprising
A following component (A-1) and a component (A-2):
(A-1) a reaction composition comprising a polycondensation reaction product of an aniline derivative and formaldehyde; and
(A-2) a reaction composition comprising a reaction product of styrene and a compound represented by the following General Formula (1):
H₂N-CH₂-A-CH₂-NH₂ (1)
(in Formula (1), A is a 1,2-phenylene group, a 1,3-phenylene group, or a 1,4-phenylene group)
wherein in the epoxy resin curing agent, a content of the component (A-1) is from 50 to 95 mass%, and a content of the component (A-2) is from 5 to 50 mass%.

2. The epoxy resin curing agent according to claim 1, wherein the aniline derivative is a compound represented by the following General Formula (2): 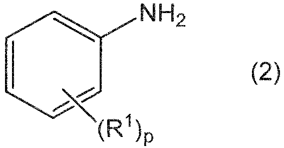 (in Formula (2), R¹ is an alkyl group having from 1 to 6 carbons or an aryl group, and p is a number from 1 to 3).

3. The epoxy resin curing agent according to claim 1 or 2, wherein in General Formula (1), A is a 1,3-phenylene group or a 1,4-phenylene group.

4. The epoxy resin curing agent according to any one of claims 1 to 3, wherein the epoxy resin curing agent further comprises, as a component (A-3), a compound represented by the following General Formula (3): 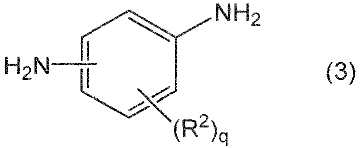 (in Formula (3), R² is an alkyl group having from 1 to 6 carbons, an alkoxy group, or an alkylthio group, and q is a number from 0 to 3).

5. An epoxy resin composition, comprising an epoxy resin and the epoxy resin curing agent according to any one of claims 1 to 4.

6. The epoxy resin composition according to claim 5, wherein the epoxy resin comprises: from 10 to 80 mass% of an epoxy resin (B1) including a glycidyl group derived from resorcinol; and from 20 to 90 mass% of an epoxy resin (B2), which is an epoxy resin other than (B1) with an aromatic ring,
wherein the epoxy resin (B2) comprises at least one selected from the group consisting of: an epoxy resin (b2-1) including a glycidyl group derived from bisphenol F; and an epoxy resin (b2-2) including a glycidyl group derived from phenol novolak.

7. The epoxy resin composition according to claim 6, wherein a total content of the epoxy resin (b2-1) and the epoxy resin (b2-2) in the epoxy resin (B2) is 50 mass% or more.

8. The epoxy resin composition according to any one of claims 5 to 7, wherein a cured product of the epoxy resin composition has a hydrogen gas permeation coefficient of 1.0 × 10⁻¹⁰ [cc•cm/(cm²•sec•cmHg)] or less.

9. A cured product of the epoxy resin composition according to any one of claims 5 to 8.

10. A fiber-reinforced composite material, comprising: a cured product of the epoxy resin composition according to any one of claims 5 to 8; and reinforcing fibers.

11. The fiber-reinforced composite material according to claim 10, wherein the reinforcing fibers are at least one selected from the group consisting of carbon fibers, glass fibers, and basalt fibers.

12. The fiber-reinforced composite material according to claim 10 or 11, wherein the fiber-reinforced composite material is obtained by filament winding molding.

13. A high-pressure gas container, comprising the fiber-reinforced composite material according to any one of claims 10 to 12.
